# EUROPÄISCHE PATENTSCHRIFT

(11) **EP 1 102 641 B1**
(45) Veröffentlichungstag und Bekanntmachung des Hinweises auf die Patenterteilung: **01.10.2003**
(21) Anmeldenummer: 99939403.4
(22) Anmeldetag: 23.07.1999
(51) Int. Cl.: B05D 3/00, B05C 11/10, B05D 1/26

(54) **VERFAHREN ZUR OPTIMIERUNG VON LACKEN**
METHOD FOR OPTIMISING LACQUERS
PROCEDE PERMETTANT D'OPTIMISER DES PEINTURES

(30) Priorität: 29.07.1998 DE 19834184
(43) Veröffentlichungstag der Anmeldung: 30.05.2001
(73) Patentinhaber: BASF AKTIENGESELLSCHAFT, 67056 Ludwigshafen (DE)
(72) Erfinder: SCHROF, Wolfgang, D-67271 Neuleiningen (DE); HORN, Dieter, D-69120 Heidelberg (DE); SCHWALM, Reinhold, D-67157 Wachenheim (DE); MEISENBURG, Uwe, D-47051 Duisburg (DE); PFAU, Andreas, D-67067 Ludwigshafen (DE)
(74) Vertreter: Isenbruck, Günter, Dr.
(86) Internationale Anmeldenummer: EP9905293
(87) Internationale Veröffentlichungsnummer: WO00006306

(56) Entgegenhaltungen:
- EP-A- 0 306 200
- EP-A- 0 616 843
- EP-A- 0 706 834
- WO-A-81/00683
- WO-A-99/47276
- DE-A- 3 542 767
- FR-A- 2 663 565
- US-A- 5 290 586
- US-A- 5 462 199

## Beschreibung

Die vorliegende Erfindung betrifft ein Verfahren und eine Vorrichtung zur Optimierung von Lacken, insbesondere von strahlungshärtbaren Lacken.

Lacke, insbesondere strahlungshärtbare Lacke, weisen im allgemeinen eine sehr komplexe Zusammensetzung auf. Wesentliche Komponenten eines strahlungshärtbaren Lacks sind u. a. Reaktiwerdünner, Oligomere, Präpolymere, Synergisten, Photoinitiatoren, Lichtschutzmittel, wie beispielsweise UV-Absorber oder sterisch gehinderte Amine, Pigmente, Mattierungsmittel, Fließmittel und andere Additive. Daraus resultiert eine Mannigfaltigkeit möglicher Lackzusammensetzungen. Bislang wurden die Lacke in der Praxis nach dem "trial and error"-Prinzip zusammengesetzt und mit langjähriger Erfahrung in aufwendigen, manuell auszuwertenden Testreihen optimiert. Bei dieser zeit- und kostenintensiven Vorgehensweise erhält man allerdings nur zufällige Treffer unter der Vielzahl der möglichen Lackzusammensetzungen, die eine ausreichend zufriedenstellende Qualität aufweisen, aber keine gezielt und systematisch ermittelten qualitativ hochwertigen Lacke, da eine gezielte und parallel durchgeführte Untersuchung des genannten Parameterraums wegen des viel zu großen Aufwands nicht möglich ist. Eine Vorhersage der Eigenschaften einer bestimmten Zusammensetzung für einen Lack ist nur begrenzt möglich, da sich verschiedene Komponenten wie z. B. Photoinitiatoren und UV-Schutzmittel gegenseitig auf eine nichtlineare Weise beeinflußen.

Aufgabe der vorliegenden Erfindung ist es, ein Verfahren und eine Vorrichtung zur Optimierung von Lacken bereitzustellen, die eine gezielte und systematische Variation der wesentlichen Komponenten eines Lacks, insbesondere eines strahlungshärtbaren Lacks ermöglichen, um somit objektiv eine optimale Zusammensetzung der verschiedenen Komponenten des Lacks bestimmen zu können.

Diese Aufgabe wird durch das erfindungsgemäße Verfahren nach Anspruch 1 und den davon abhängigen Unteransprüchen gelöst. Das erfindungsgemäße Verfahren stellt ein Verfahren zur Optimierung von strahlungshärtbaren Lackzusammensetzungen dar. Erfindungsgemäß werden dabei mindestens folgende Verfahrensschritte in einer dafür vorgesehenen Vorrichtung durchgeführt:
a) Auftragen verschiedener strahlungshärtbarer Lackzusammensetzungen an verschiedenen Stellen einer Substratoberfläche.
   Dabei werden gleichzeitig mehrere verschiedene Lackzusammensetzungen an verschiedenen, zusammen ein Raster bildenden Stellen der Substratoberfläche aufgetragen. Dabei werden die verschiedenen Zusammensetzungen in geeigneter Weise mit Hilfe von Dosierpipetten, Mikrorakeln oder Mikrosprühköpfen rechnergesteuert an die entsprechenden Stellen der gewünschten Substratoberfläche, wie beispielsweise einer Holz- oder einer Metall- oder einer Papieroberfläche, aufgetragen.
   Vorzugsweise werden die Stellen der Substratoberfläche, an denen die verschiedenen Lackzusammensetzungen jeweils aufgebracht werden, möglichst klein gewählt, um auf einer einzigen Substratoberfläche viele verschiedene Lackzusammensetzungen auftragen zu können. Vorzugsweise bilden die Stellen der Substratoberfläche, an denen die Lackzusammensetzungen aufgebracht werden, eine Art Matrix, entsprechend einer Anordnung von m Reihen mit je n Spalten, wobei n und m jeweils kleiner als 1000 sind. Die Größe einer einzelnen Stelle der Substratoberfläche, auf welcher eine der verschiedenen Lackzusammensetzungen aufgetragen wird, hängt hauptsächlich von der später vorzunehmenden Charakterisierung des Lacks ab. Mit gängigen Verfahren lassen sich bis zu 10000 verschiedene Lackzusammensetzungen auf 10 cm² einer Substratoberfläche untersuchen.
   Danach werden die Lackzusammensetzungen optional getrocknet, zum Beispiel um ein wegen der optimalen Mischung in manchen Fällen nötiges Lösungsmittel wieder verdampfen zu lassen.
b) Härten des mindestens einen Lacks an der mindestens einen Stelle der Substratoberfläche.
   Dabei werden die verschiedenen Lackzusammensetzungen, die an verschiedenen, zusammen ein Raster bildenden Stellen der Substratoberfläche aufgetragen sind, strahlungsgehärtet. Bei der Strahlungshärtung, beschrieben beispielsweise in *J.-P. Fouassier*, *Photoinitiation, Photopolymerization and Photocuring, Hanser Publishers, München, 1995,* wird das Gemisch der einzelnen Komponenten einer Lackzusammensetzung durch Belichtung, vorzugsweise UV-Belichtung, in ein dreidimensionales, mechanisch stabiles Polymernetzwerk überführt. Vorteile dieser Technik liegen in der hohen Geschwindigkeit, dem niedrigen Energieverbrauch, dem Auftreten von nahezu keinen umweltschädlichen Reaktionsprodukten bei der Härtung und niedrigen Kosten. Dies wird vorzugsweise für alle entsprechenden Stellen der Substratoberfläche gleichzeitig vorgenommen, vorzugsweise durch eine großflächige Belichtung mit UV-Licht oder mit Elektronenstrahlen. Dabei entstehen dreidimensional gehärtete Lackschichten an den entsprechenden Stellen der Substratoberfläche. Die großflächige Belichtung ist sehr zeit- und energiesparend und stellt darüberhinaus die notwendige gleichmäßige Prozessierung aller Lackschichten, die auf der Substratoberfläche aufgetragen sind, dar. Vorzugsweise werden die verschiedenen Lackzusammensetzungen, die an verschiedenen, zusammen ein Raster bildenden Stellen der Substratoberfläche aufgetragen sind, während der Härtung erwärmt. Damit kann zum einen die Reaktion, d. h. die Bildung des dreidimensionalen Netzwerks, beschleunigt werden, und zum anderen kann damit gewährleistet werden, daß die Reaktion vollständig vonstatten geht.
c) Bestimmung des Zustandes, insbesondere der Härtung und/oder der Vergilbung und/oder des Glanzes, der verschiedenen Lackzusammensetzungen an den verschiedenen Stellen der Substratoberfläche, den der Lack als Folge von Schritt a) und b) aufweist.
   Wie oben ausgeführt können erfindungsgemäß die einzelnen, den Zustand beschreibenden Parameter, wie zum Beispiel Härtung, Vergilbung und Glanz jeweils einzeln bestimmt bzw. ausgewertet werden, oder es werden alle der Parameter bestimmt bzw. ausgewertet, wobei die Bestimmung/Auswertung aller Parameter bevorzugt ist, da sie praktisch ein vollständiges Bild über den Zustand des Lacks gibt.
   Die Charakterisierung der verschiedenen gehärteten Lackzusammensetzungen, die auf der Substratoberfläche aufgetragen sind, erfolgt mittels eines spektroskopischen Verfahrens, das eine hohe laterale Ortsauflösung hat sowie wenn gefordert eine ausreichende Tiefenauflösung aufweist. Auf diese Weise kann sichergestellt werden, daß immer nur eine Lackzusammensetzung an einer der betreffenden Stellen der Substratoberfläche charakterisiert wird ohne irgendeine Wechselwirkung mit Lackzusammensetzungen, die an benachbarten Stellen der Substratoberfläche aufgetragen sind. Vorzugsweise verwendet man hier die Methode der konfokalen Raman-Spektroskopie. Hierbei wird das bei der Härtung entstehende Netzwerk des Lacks anhand des Verschwindens reaktiver Gruppen nachgewiesen, d. h. der bei der Härtung stattgefundene Reaktionsumsatz wird direkt ermittelt (*W. Schrof, L. Häußling, Tiefenauflösung der Trocknungsvorgänge in Lackfilmen, erschienen in "Farbe und Lack", Bd. 103, 1997, 22-27*). Durch die Verwendung hochempfindlicher Spektrometer, die hauptsächlich in Rückstreuung arbeiten, können hierbei die Meßzeiten bis in den Sekundenbereich verkürzt werden. Bezüglich des Standes der Technik im Bereich der Raman-Spektroskopie bzw. der konfokalen Abbildung sei verwiesen auf *Schrader B., Infrared and Raman Spectroscopy, VCH, Weinheim, 1995* und *Markwort L., Kip B., Da*. *Silva E., Roussel B., Appl. Spectrosc. 49 (1995) 1411-30*. Neben der konfokalen Raman-Spektroskopie kann auch die IR-Spektroskopie oder die Fluoreszenzspektroskopie verwendet werden. Fluoreszenzspektroskopische Methoden (*O. Wolfbeiß, Fluorescence Spectroscopy: New Methods and Applications, Springer, Berlin, 1993*) analysieren den Aufbau des infolge der Härtung entstandenen Lacknetzwerks anhand der Abnahme der lokalen Beweglichkeit bzw. der Translationsdiffusion von Fluoreszenzsonden. Alle diese optischen Methoden lassen sich mit hoher Ortsauflösung, zum Beispiel in Kombination mit geeigneten Linsen oder einem Mikroskop durchführen. In einer weiteren bevorzugten Ausführungsform werden die optischen Abbildungen anstatt mit Linsen oder Mikroskopen mit Lichtleitern (*E.-G*. *Neumann, "Single Mode Fibres", Springer, Berlin, 1988*) realisiert. Die Ermittlung von Tiefenprofilen des infolge der Härtung entstandenen Netzwerks des zu charakterisierenden Lacks kann, wie bereits erwähnt, mittels der konfokalen Raman-Spektroskopie erfolgen. Damit erhält man zusätzliche Informationen zu typischen Phänomenen bei der Strahlungshärtung, wie z. B. Sauerstoffinhibierung an der Substratoberfläche oder unzureichende Härtung in tieferliegenden Bereichen durch Eindringtiefeneffekte für das UV-Licht. Somit wird eine zusätzliche Auswahl geeigneter Lackzusammensetzungen möglich. Mittels des konfokalen Aufbaus, zum Beispiel mit einer konfokalen Blende im Nachweisstrahlengang, wird eine Tiefenebene bis unterhalb 1µm Dicke selektiert. Eine vorzugsweise verwendete zusätzliche automatische Fokussier-Einheit ermöglicht die Abbildung auf die Lackoberfläche. Tiefenprofile werden durch nachfolgende Messungen an relativ zur Lackoberfläche tieferen Ebenen erhalten. Dies wird vorzugsweise durch ein rechnergesteuertes Anheben des Substrats, auf dessen Oberfläche der Lack aufgetragen ist, oder durch Versenken des Fokus, z. B. über eine piezogesteuerte Optik erreicht.
   In einer weiteren erfindungsgemäßen Ausführungsform wird die Härtung auch mit Hilfe von Mikrohärtemessern ( *H.-H. Behncke, W. Weiler*, *Computergesteuerte Mikrohärtemessung unter Prüfkraft, erschienen in "Materialprüfung", Bd. 7, 1988*) wie z. B. einem Fischerscope oder einem Nanoindenter mechanisch bestimmt. Durch punktförmige Eindringmessungen (*Bernham, R.J. Colton, Measuring the Nanomechanical Properties and Surface Forces of Materials Using an Atomic Force Microscope, J. Vac. Sci. Technol.*, *Bd A7, 1989, 2906*) lassen sich auch mechanische Eigenschaften des entsprechenden Lacks bestimmen. Mit Hilfe von passend gewählten Verschiebetischen für die entsprechende Versuchsanordnung kann die gesamte Substratoberfläche abgerastert werden.

Eine geeignete Vorrichtung zum rasterartigen Aufbringen mindestens eines Lackes auf einer Substratoberfläche weist die nachstehenden Komponenten a) bis c) auf:
a) eine Dosiereinrichtung zur Dosierung mindestens einer, vorzugsweise aller Komponenten des mindestens einen Lacks, Die Dosierung der mindestens einen, vorzugsweise aller Komponenten des mindestens einen Lacks erfolgt hierbei vorzugsweise automatisch.
b) eine Mischeinrichtung zum Vermischen der einzelnen Komponenten des mindestens einen Lacks,
   Es gibt mehrere mögliche Vorgehensweisen, um eine gute Durchmischung der einzelnen Komponenten zu erreichen. Die Komponenten einer Lackzusammensetzung können in einem gemeinsamen Lösungsmittel oder in verschiedenen, miteinander verträglichen Lösungsmitteln gelöst werden und somit miteinander vermischt werden, und/oder sie können erhitzt werden, und/oder sie können mechanisch durchmischt werden, wie zum Beispiel durch Rühren oder durch Einsatz von Ultraschall. Durch eine systematische Variation der Komponenten und ihrer Konzentration in vorgebbaren Schritten wird eine Vielzahl von flüssigen, voneinander verschiedenen Lackzusammensetzungen erzeugt.
c) eine Pipettier- oder Sprüheinrichtung zum sukzessiven Auftragen des mindestens einen Lacks an gegeneinander lokal abgrenzbaren, zusammen ein Raster bildenden Stellen auf der Substratoberfläche.
   Der mindestens eine Lack, bzw. die verschiedenen Lackzusammensetzungen werden mit Hilfe von Pipettier- oder Sprüheinrichtungen auf dafür vorgesehene Stellen der Substratoberfläche aufgetragen. Vorzugsweise werden Pipettier- oder Sprühroboter eingesetzt, die eine automatische und damit zeit- und kostensparende Vorgehensweise ermöglichen.

Die lokal abgrenzbaren, zusammen ein Raster bildenden Stellen auf der Substratoberfläche, die für die Applikation je einer Lackzusammensetzung vorgesehen sind, entsprechen in einer bevorzugten Ausführungsform der Erfindung Vertiefungen in der Substratoberfläche, die in ihrer Gesamtheit ein Raster auf der Substratoberfläche bilden. In diese Vertiefungen werden dann die entsprechenden Lackzusammensetzungen eingefüllt.

In einer weiteren bevorzugten Ausführungsform wird die Substratoberfläche in geeigneter Weise hydrophil bzw. hydrophob modifiziert, so daß auch hier Lackzusammensetzungen rasterförmig auf der Substratoberfläche aufgebracht werden können, ohne daß es zu unerwünschtem Vermischen unterschiedlicher Lackzusammensetzungen kommt.

Zur Vermeidung einer Sublimation leicht flüchtiger Komponenten wie z. B. von Reaktivverdünnern, wird das beschichtete Substrat vorzugsweise mit einer UVdurchlässigen Folie oder Schicht abgedeckt.

In einer weiteren bevorzugten Ausführungsform der Erfindung wird ebenfalls auf der Substratoberfläche ein Raster von Lackzusammensetzungen aufgebracht, allerdings werden hier die einzelnen Komponenten mittels geeigneter Pipettiereinrichtungen, vorzugsweise Pipettierrobotern, oder mittels Tröpfchengeneratoren direkt auf der Substratoberfläche zusammengeführt und nicht zuerst in einem gesonderten Behältnis. Um eine gute Durchmischung der einzelnen Komponenten einer Lackzusammensetzung gewährleisten zu können, werden sie immer nur teilweise, alternierend oder gleichzeitig, das heißt zum Beispiel durch Aufbringen von Pico- oder Nanolitertröpfchen, aufgebracht. Die Reduktion der Tröpfchengröße auf einen Durchmesser im Mikrometerbereich bzw. auf ein Volumen im Picoliterbereich erlaubt eine gute Durchmischung bei alternierendem bzw. gleichzeitigem Aufbringen. Mit diesem Verfahren umgeht man den Mischungsschritt der einzelnen Komponenten einer Lackzusammensetzung in externen Behältnissen. Die mögliche Anwendbarkeit dieser Methode hängt allerdings sehr stark von der Natur und dem Zusammenwirken der einzelnen miteinander zu durchmischenden Komponenten der entsprechenden Lackzusammensetzung ab.

Zur Bestimmung des Zustandes des Lacks gehört in erster Linie die Bestimmung der Härtung. Bei der Strahlungshärtung einer Lackzusammensetzung wird die Härtung im wesentlichen bestimmt durch den Umsatz der reaktiven Komponenten. Dieser Umsatz kann, wie bereits erwähnt, mit Hilfe von spektroskopischen Methoden ermittelt werden. Die schwingungsspektroskopischen Verfahren, wie Raman- und IR-Spektroskopie, ermitteln direkt den Reaktionsumsatz. Vorzugsweise wird die Raman-Spektroskopie verwendet. Hierzu weist die Vorrichtung eine Einrichtung zur Einstrahlung von monochromatischem Licht an mindestens einer der gegeneinander lokal abgrenzbaren, zusammen ein Raster bildenden Stellen auf der Substratoberfläche und der Detektion von Streulicht aus der mindestens einen der gegeneinander lokal abgrenzbaren, zusammen ein Raster bildenden Stellen auf der Substratoberfläche auf, um so an der mindestens einen der gegeneinander lokal abgrenzbaren, zusammen ein Raster bildenden Stellen auf der Substratoberfläche den Reaktionsumsatz infolge der Strahlungshärtung bestimmen zu können.

Eine andere Alternative bietet die Fluoreszenzspektroskopie, bei der mittels eindotierten Sonden der Aufbau des physikalischen Netzwerks bestimmt wird.

Um größere laterale Bereiche der Substratoberfläche, die rasterartig mit mindestens einer, vorzugsweise aber mehreren verschiedenen Lackzusammensetzungen belegt ist, untersuchen zu können, ist es im Rahmen der vorliegenden Erfindung ferner möglich, das mit den zu untersuchenden Lackzusammensetzungen belegte Substrat automatisch mittels rechnergesteuerter Verschiebetische so zu bewegen, daß jede der gegeneinander lokal abgrenzbaren, zusammen ein Raster bildenden Stellen auf der Substratoberfläche, die jeweils mit einer Lackzusammensetzung belegt sind, nacheinander analysiert werden kann. Dieses Verfahren erlaubt parallelisierte Messungen mit einem hohen Probendurchsatz in kurzer Zeit und ohne hohen Personalaufwand.

Zur Bestimmung des Zustandes des Lacks gehört desweiteren u. a. auch die Charakterisierung des Glanzes bzw. der Vergilbung der zu untersuchenden Lackzusammensetzungen. Analog zur Bestimmung der Härtung lassen sich auch Glanz und Vergilbung aus einer spektroskopischen Analyse reflektierten bzw. gestreuten Lichts ortsaufgelöst bestimmen.

Weitere Vorteile, Merkmale und Anwendungsmöglichkeiten der Erfindung ergeben sich aus der nachfolgenden Beschreibung eines erfindungsgemäßen Versuchsaufbaus in Verbindung mit der entsprechenden Figur. Es zeigt:

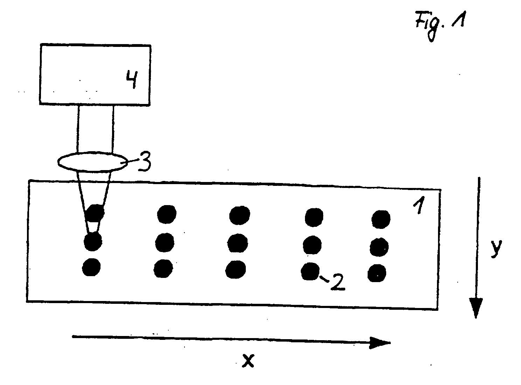

- Fig. 1: Schematischer Aufbau einer Vorrichtung zur Durchführung des erfindungsgemäßen Verfahrens

Auf den lokal voneinander abgrenzbaren, zusammen ein Raster bildenden Stellen 2 auf einer Substratoberfläche 1 sind jeweils zu untersuchende Lackzusammensetzungen aufgetragen. Mittels eines spektroskopischen Verfahrens wird hier die Härtung, der Glanz und die Vergilbung der einzelnen, auf den verschiedenen Stellen 2 der Substratoberfläche 1 aufgetragenen und bereits gehärteten Lackzusammensetzungen bestimmt. An diesen entsprechenden Stellen wird mittels einer Abbildungs- bzw. Fokussierlinse 3 und eines Spektrometers 4, zum Beispiel eines Raman-Mikroskops, jeweils ein Spektrum aufgenommen. Anhand der so erhaltenen Spektren lassen sich sodann gezielte Aussagen über den Reaktionsumsatz an den entsprechenden Stellen der Substratoberfläche machen und somit letztlich über die Härtung, den Glanz und die Vergilbung der dort aufgetragenen, zu untersuchenden Lackzusammensetzungen. Bevorzugt wird der Reaktionsumsatz mittels einer Optik ermittelt, die es ermöglicht, den Fokus des eingeleiteten monochromatischen Lichts innerhalb der aufgetragenen Lackschicht zu verschieben, wie zum Beispiel mit der konfokalen Raman-Spektroskopie. Hierbei ist es möglich durch Hin- und Herbewegen des Senders bzw. des Mikroskopobjektivs über einen PiezoTranslatoren entlang der optischen Achse ein beliebiges Tiefensegment innerhalb der Lackschicht einzustellen. Es kann eine Genauigkeit von ca. 1 µm bis 3 µm bezüglich des eingestellten Fokus, d. h. des gewünschten Tiefensegments, erreicht werden. Die Tiefenschärfe ist durch Verwendung einer Blende oder einer Lichtleitfaser mit geeignetem Innendurchmesser einstellbar. Um die gesamte Substratoberfläche untersuchen zu können, d. h. sowohl in x-Richtung wie auch in y-Richtung, ist es möglich, das Substrat mittels eines steuerbaren Translationstisches zu bewegen.

## Patentansprüche

1. Verfahren zur automatischen Erzeugung und Charakterisierung einer Mehrzahl von Lackzusammensetzungen auf einer Substratoberfläche, bei dem
a) verschiedene strahlungshärtbare Lackzusammensetzungen mittels Dosierpipetten, Mikrorakeln oder Mikrosprühköpfen rechnergesteuert an verschiedenen, zusammen ein Raster bildenden Stellen der Substratoberfläche aufgetragen werden,
b) die Lackzusammensetzungen durch Belichtung strahlungsgehärtet werden, und
c) die verschiedenen gehärteten Lackzusammensetzungen auf der Substratoberfläche mittels eines spektroskopischen Verfahrens, ausgewählt aus konfokaler Raman-Spektroskopie, IR- und Fluoreszenzspektroskopie, und/oder mittels Mikrohärtemessern charakterisiert werden.

2. Verfahren nach Anspruch 1, **dadurch gekennzeichnet, dass** die zusammen ein Raster bildenden Stellen der Substratoberfläche Vertiefungen in der Substratoberfläche sind, in die die Lackzusammensetzungen eingefüllt werden.

3. Verfahren nach Anspruch 1, **dadurch gekennzeichnet, dass** die Substratoberfläche derart hydrophil oder hydrophob modifiziert ist, dass eine Vermischung der rasterförmig aufgebrachten Lackzusammensetzungen vermieden wird.

4. Verfahren nach einem der Ansprüche 1 bis 3, **dadurch gekennzeichnet, dass** die einzelnen Komponenten der Lackzusammensetzungen mittels Tröpfchengeneratoren direkt auf der Substratoberfläche zusammengeführt werden.

5. Verfahren nach einem der Ansprüche 1 bis 4, **dadurch gekennzeichnet, dass** durch großflächige Belichtung mit UV-Licht oder Elektronenstrahlen alle Lackzusammensetzungen gleichzeitig strahlungsgehärtet werden.

6. Verfahren nach einem der Ansprüche 1 bis 5, **dadurch gekennzeichnet, dass** die Charakterisierung der gehärteten Lackzusammensetzungen mittels konfokaler Raman-Spektroskopie erfolgt.

7. Verfahren nach Anspruch 6, **dadurch gekennzeichnet, dass** die Charakterisierung der gehärteten Lackzusammensetzungen mittels eines Fischerscope oder eines Nanoindenter erfolgt.

8. Verfahren nach einem der Ansprüche 1 bis 7, **dadurch gekennzeichnet, dass** die Substratoberfläche mittels eines rechnergesteuerten Verschiebetisches so bewegt wird, dass jede der zusammen ein Raster bildenden Stellen auf der Substratoberfläche, die mit einer Lackzusammensetzung belegt ist, nacheinander analysiert werden.

9. Verfahren nach einem der Ansprüche 1 bis 8, **dadurch gekennzeichnet, dass** die Eigenschaften, hinsichtlich derer die verschiedenen Lackzusammensetzungen charakterisiert werden, ausgewählt sind aus der Gruppe bestehend aus Härtung, Glanz und Vergilbung.

10. Verfahren nach einem der Ansprüche 1 bis 9 zur Optimierung von Lackzusammensetzungen, **dadurch gekennzeichnet, dass** die verschiedenen Lackzusammensetzungen systematisch variiert werden.

## Claims

1. A method of automatically generating and characterizing a plurality of coating compositions on a substrate surface, which comprises
a) applying different radiation-curable coating compositions at different points on the substrate surface, which together form a grid, by means of metering pipettes, microdoctors or microspray heads, under computer control,
b) radiation-curing the coating compositions by exposure, and
c) characterizing the different cured coating compositions on the substrate surface by means of a spectroscopic technique selected from confocal Raman spectroscopy, IR spectroscopy and fluorescence spectroscopy and/or by means of microhardness measuring devices.

2. A method as claimed in claim 1, wherein the points on the substrate surface which together form a grid are recesses in the substrate surface into which the coating compositions are introduced.

3. A method as claimed in claim 1, wherein the substrate surface has been hydrophilically or hydrophobically modified such as to prevent mixing of the coating compositions applied in gridlike manner.

4. A method as claimed in any of claims 1 to 3, wherein the individual components of the coating compositions are brought together directly on the substrate surface by means of droplet generators.

5. A method as claimed in any of claims 1 to 4, wherein all of the coating compositions are radiation-cured simultaneously by large-area exposure to UV light or electron beams.

6. A method as claimed in any of claims 1 to 5, wherein the cured coating compositions are **characterized by** means of confocal Raman spectroscopy.

7. A method as claimed in claim 6, wherein the cured coating compositions are **characterized by** means of a Fischerscope or of a nanoindenter.

8. A method as claimed in any of claims 1 to 7, wherein the substrate surface is moved by means of a computer-controlled displacement platform such that each of the points on the substrate surface which together form a grid, the surface being covered with a coating composition, are analyzed in succession.

9. A method as claimed in any of claims 1 to 8, wherein the properties in respect of which the various coating compositions are characterized are selected from the group consisting of curing, gloss and yellowing.

10. A method as claimed in any of claims 1 to 9 for optimizing coating compositions which comprises systematically varying the different coating compositions.

## Revendications

1. Procédé pour la préparation et la caractérisation automatiques d'une pluralité de compositions de laque sur une surface de substrat, dans lequel
a) différentes compositions de laque durcissables sous irradiation sont déposées au moyen de pipettes doseuses, de micro-racles ou de micro-tétes de pulvérisation, avec commande par ordinateur, sur différentes positions de la surface de substrat formant ensemble une grille,
b) les compositions de laque sont durcies sous irradiation par éclairement, et
c) les diverses compositions de laque durcies sur la surface de substrat sont caractérisées au moyen d'un procédé spectroscopique, choisi parmi la spectroscopie Raman confocale, la spectroscopie IR et la spectroscopie de fluorescence, et/ou au moyen de mesures de micro-dureté.

2. Procédé selon la revendication 1, **caractérisé par le fait que** les positions de la surface de substrat formant ensemble une grille sont des encoches dans la surface de substrat qui sont remplies avec les compositions de laque.

3. Procédé selon la revendication 1, **caractérisé par le fait que** la surface de substrat est modifiée de manière hydrophile ou hydrophobe de manière à éviter un mélange des compositions de laque appliquées sous forme de grille.

4. Procédé selon l'une des revendications 1 à 3, **caractérisé par le fait que** les composants individuels des compositions de laque sont réunis directement sur la surface du substrat au moyen de générateurs de gouttelettes.

5. Procédé selon l'une des revendications 1 à 4, **caractérisé par le fait que** par irradiation sur grande surface avec de la lumière UV ou des rayonnements électroniques toutes les compositions de laque sont durcies sous irradiation simultanément.

6. Procédé selon l'une des revendications 1 à 5, **caractérisé par le fait que** la caractérisation des compositions de laque durcies s'effectue au moyen d'une spectroscopie Raman confocale.

7. Procédé selon la revendication 6, **caractérisé par le fait que** la caractérisation des compositions de laque durcies s'effectue au moyen d'un Fischerscope ou d'un appareil de mesure de nanoindentation.

8. Procédé selon l'une des revendications 1 à 7, **caractérisé par le fait que** la surface du substrat est déplacée au moyen d'un plateau à déplacement commandé par ordinateur de telle manière que chacune des positions formant ensemble une grille sur la surface du substrat sur laquelle est déposée une composition de laque soit analysée l'une après l'autre.

9. Procédé selon l'une des revendications 1 à 8, **caractérisé par le fait que** les propriétés vis-à-vis desquelles les différentes compositions de laque sont caractérisées sont choisies dans le groupe consistant en le durcissement, la brillance et le jaunissement.

10. Procédé selon l'une des revendications 1 à 9 pour l'optimisation de compositions de laque, **caractérisé par le fait qu'**on fait varier systématiquement les différentes compositions de laque.
